# EUROPEAN PATENT SPECIFICATION

(11) **EP 3 605 338 B1**
(45) Date of publication and mention of the grant of the patent: **21.10.2020**
(21) Application number: 18187395.1
(22) Date of filing: 03.08.2018
(51) Int. Cl.: G06F 11/34, G06F 11/32, G06K 9/00, G06K 9/62

(54) **APPARATUS, PROGRAM, & COMPUTER-IMPLEMENTED IMAGE PROCESSING METHOD FOR PREDICTING EXECUTION PERFORMANCE METRICS**
VORRICHTUNG, PROGRAMM UND COMPUTERIMPLEMENTIERTES BILDVERARBEITUNGSVERFAHREN ZUR VORHERSAGE VON AUSFÜHRUNGSLEISTUNGSKENNZAHLEN
APPAREIL, PROGRAMME ET PROCÉDÉ DE TRAITEMENT D'IMAGE MIS EN OEUVRE PAR ORDINATEUR POUR PRÉDIRE DES MÉTRIQUES DE PERFORMANCE D'EXÉCUTION

(43) Date of publication of application: 05.02.2020
(73) Proprietor: FUJITSU LIMITED, Kanagawa 211-8588 (JP)
(72) Inventor: AL-JARRO, Ahmed, London, Greater London W1T 6PF (GB)
(74) Representative: Haseltine Lake Kempner LLP

(56) References cited:
- DE-A1-102016 223 484
- US-A1- 2016 188 431
- KENNETH HOSTE ET AL: "Performance prediction based on inherent program similarity", PARALLEL ARCHITECTURES AND COMPILATION TECHNIQUES, 1 January 2006 (2006-01-01), page 114, XP055548893, 2 Penn Plaza, Suite 701 New York NY 10121-0701 USA DOI: 10.1145/1152154.1152174 ISBN: 978-1-59593-264-8

## Description

The invention lies in the field of image processing and in particular relates to the processing of images encoding software profiling reports.

Characterising the performance of computer software codes (applications/executables), and finding similarities between their execution profiles, relies on interpreting the outcome from profilers, i.e. software profiling tools that perform a profiling process. Profiling is a form of program analysis that measures a variety of metrics that characterise software applications, with focus on run-time behaviour given a particular input. Non-exhaustive examples of such metrics are the elapsed time from the beginning to the end of the program execution, and the percentage of communication time in a distributed parallel program over its total elapse time, etc. However, the outcomes of profilers are typically not straightforward to follow, and often require deep knowledge of their functionalities. Moreover, a user needs to be fluent in understanding the metrics such profiling tools produce, which are typically presented in a text-based format, in order to be able to read, analyse and compare more than one profile outcome. As a result, a steep learning process for acquiring the knowledge needed for understanding working details of the profiling technologies is required. In addition, since the analysis of these profiling results can be laborious and time-consuming, this manual process can adversely impact users' work productivity.

Further, it is often the case that different versions of the same code (application/executable) are to be characterised. These execution versions (or benchmarks) may differ in how they are run on the possibly different computing hardware with also possibly different software settings, where different settings are applied for each benchmark before obtaining the associated profiles (code performance). As a result, different profilers may need to be used to capture the relevant metrics for these various and different execution environments/settings. It is evident that the more exhaustive the profiling process is, the higher the number of different benchmarks is required. Therefore, a plethora of text-based information is also produced. As a result, the requirements for comprehending and processing the resulting wide-ranged metrics, produced in a text-based format, are also exhaustive.

As technologies in both hardware and software continue to evolve, so do the requirements to judge whether the new advancements would be favourable for executing software code relative to a present technology.

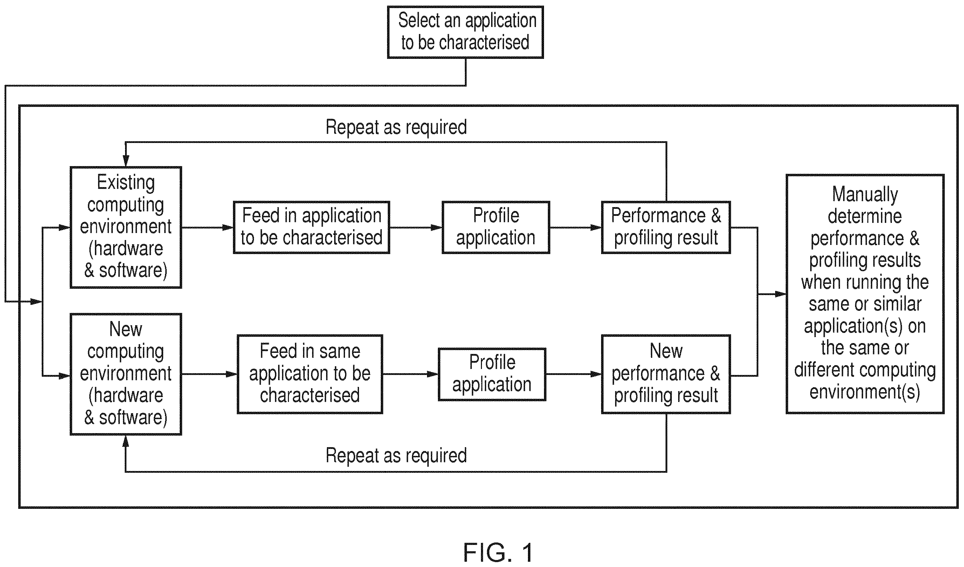

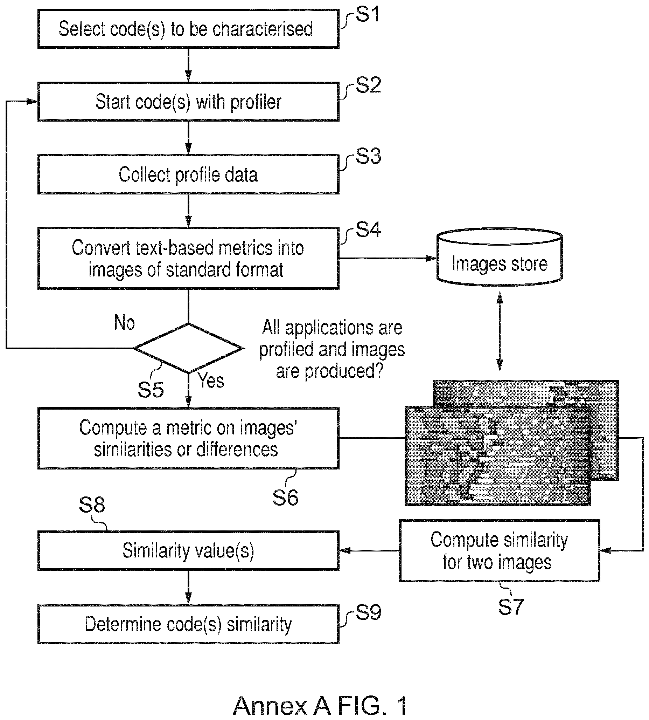

Furthermore, porting different versions of code to potential destination computing environments with software profiling tools in order to run trial executions to obtain execution performance indicators is time-consuming, laborious, and computationally expensive in terms of communication and execution resource use. Figure 1 illustrates an existing technique for assessing performance of code on a new computing environment.

Non-patent literature "KENNETH HOSTE ET AL: "Performance prediction based on inherent program similarity", PARALLEL ARCHITECTURES AND COMPILATION TECHNIQUES, 1 January 2006 (2006-01-01), page 114, 2 Penn Plaza, Suite 701 New York NY 10121-0701 USA DOI: 10.1145/1152154.1152174 ISBN: 978-1-59593-264-8" discloses an approach for addressing the ubiquitous problem in benchmarking which is the identification of the platform that yields the best performance for the given application of interest. The key idea is to compare inherent program characteristics of the application of interest against the same characteristics for all programs in the standardised benchmark suite. Based on the inherent similarity of the application of interest with the benchmarks in the benchmark suite, a number of proxies are identified and a performance prediction can be made using the performance numbers of the proxies.

US2016188431 (A1) discloses a system and method for predicting performance of a software application over a target system. The method comprises generating a benchmark suite such that benchmark indicates a combination of workloads applied over a set of standard software applications running on a source system. The method further comprises identifying a benchmark of the benchmark suite, wherein the benchmark has performance characteristics the same as that of the software application. The method further enables remotely executing the set of standard software applications associated with the benchmark on the target system with the combination of workload as specified by the benchmark. The method further enables recording a performance of the set of standard software applications on the target system. Based on the performance of the standard software applications on the target system the performance of the software application is predicted

The prior art does not disclose the selection of representative benchmark codes based on a similarity of images encoding profiling reports of their execution with such an image of an application of interest.

It is desirable to automate aspects of the process of analysing execution performance of software codes and to reduce the dependency on trial executions.

### SUMMARY

Embodiments include a computer-implemented image processing method for predicting execution performance metrics for a subject code on a target computing environment, comprising: obtaining target environment member images each encoding, in a standardised format, a software profiling report of an execution on the target computing environment of a member of a set of codes t, the software profiling report being output by a software profiling tool and in a report format comprising a value of each of a plurality of labelled execution performance metrics, wherein the members of the set of codes are selected by: obtaining a software profiling report of an execution of the subject code on a host computing environment currently hosting the subject code, the software profiling report being output by a software profiling tool and in accordance with the report format, generating a host environment subject image encoding, in the standardised format, the obtained software profiling report, storing in a host environment image repository images encoding, in the standardised format, software profiling reports of executions on the host computing environment of respectively identified codes, storing in a target environment image repository, images encoding, in the standardised format, software profiling reports of executions on the target computing environment of respectively identified codes, querying the host environment image repository and the target environment image repository to identify, as candidate codes, codes in respect of which images are stored in both the host environment image repository and the target environment image repository, and determining the n most similar images to the host environment subject image from among host environment candidate images, host environment candidate images being the images stored in the host environment image repository in respect of the candidate codes, and selecting as the members of the set of codes the candidate codes in respect of which the n most similar images are stored; combining the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes; processing the combined target environment member image by decoding the combined target environment member image to extract a predicted software profiling report, and outputting the predicted software profiling report.

Advantageously, the computer-implemented image processing method provides an effective, automated, and easy to use mechanism for predicting execution performance in codes using image processing and analysis without needing to port code to a target computing environment for execution.

The method exploits the feasibility to automate the process of predicting the execution performance of codes via image processing rather than trial executions. Images encoding text-based execution performance metrics for codes are combined, and a decoder applied to the combined image to decode the image into values of execution performance metrics (i.e. a software profiling report) representing a prediction of performance of a code not previously executed on a new (target) computing environment.

It is often the case that hardware specifications and/or software libraries being used are changed to an upgrade to more advanced systems or a better optimised software library. Therefore, to obtain execution performance information for codes on the new computing environment, a range of execution experiments are required in order to determine how the modifications will affect codes' execution performance. Advantageously, embodiments leverage image processing of images encoding software profiling reports of codes already executed on a new or "target" computing environment to predict execution performance of new codes on the target computing environment. In this manner, predicted software profiling reports for subject code on the target computing environment are generated without needing to execute the subject code on the target computing environment.

A code is, for example, a piece of executable software code such as an application. Software profiling tools monitor executions of code to produce execution performance information describing or representing the execution as values each representing a profiling metric, wherein a profiling metric is taken to be an aspect or characteristic of the execution or a phase thereof. Software profiling reports, being collections of values of labelled characteristics, are encoded into a standardised image format, irrespective of the particular software profiling tool used (hence "standardised"), for example, using systems and methods disclosed in German patent application no. 102016223484.6. For example, the encoding may comprise determining a proportion or size of a region or area of the image corresponding to a particular profiling metric to colour or pattern in a particular manner in dependence upon the corresponding value in the software profiling report.

The software profiling report of an execution on the target computing environment of a member of a set of codes encoded in the target environment member images may be of executions in progress or executions that are already completed.

Combining the obtained target environment member images provides a mechanism to build up an image representing execution of the subject code on the target computing environment as a composite of component images. The decoding reverses the principle used to encode software profiling reports as images, and thus enables a software profiling report to be obtained, extracted, or derived, from an image in the standardised format. The software profiling report so obtained is a prediction of execution performance of the subject code on the target computing environment.

The quality of prediction improves if the set of codes selected to compose the combined target environment member image exhibit similarities to the subject code in terms of their execution performance. Since the subject code is not executed on the target computing environment, executions on the host computing environment are used as a basis to identify similar codes. In particular, executions on the host computing environment for which the software profiling reports have already been encoded into images are compared with an image encoding an execution of the subject code on the host computing environment. Advantageously, such a technique leverages image processing techniques carried out on stored images in order to identify a set of codes similar to the subject code.

Furthermore, determining the n most similar images to the subject image from among the host environment candidate images may comprise: using a deep neural network as a feature extractor to extract features from the subject image and from the host environment candidate images; comparing the extracted features from the subject image with the extracted features from each of the host environment candidate images individually to obtain a similarity score quantifying similarity between the features extracted from the first image and each of the host environment candidate images; and finding the n greatest similarity scores, and determining the respective images to be the n most similar images to the first image.

Advantageously, such methods exploit the capability of deep neural networks (DNNs) to extract features from images that have a bearing on classifying similarity and difference between images. The deep neural network for this purpose may be, for example, a deep neural network pre-trained for image recognition and image classification. DNNs suitable for this purpose, by way of example, include: AlexNet, Inception, ResNet, VAE, GANs, etc.

The comparison may be a mathematical computation such as a cosine distance calculation.

The standardised format may comprise comparable information/values (i.e. values representing the same parameter or metric) at the same or corresponding pixel locations within the image.

Optionally, the decoding may include feeding the single new image into an autoencoder artificial neural network trained to extract software profiling reports from images conforming to the standardised format.

The same autoencoder artificial neural network (autoencoder) may execute the encoding of software profiling reports into images of the standardised format. The autoencoder comprises an encoder and a decoder, each of which transition or transform data, in the case of the encoder from software profiling report into an image of the standardised format, and in the case of the decoder from an image of the standardised format into a software profiling report (or vice-versa). Autoencoders are specially suited to learning transitions from training data and applying the learned transitions to subject data.

Optionally, the plurality of labelled profiling metrics may include information on memory usage, time complexity, usage of particular instructions, frequency and/or duration of function calls, and information on the frequency and/or duration of communication calls in a parallel environment, the form of the label in each case being determined by the software profiling tool.

The value of each of the labelled profiling metrics specified in the software profiling report may relate to the entire execution or to a specified stage or phase thereof. Certain of the labelled profiling metrics may have more than one value in the software profiling report in the case of there being multiple phases or stages.

Embodiments may further comprise populating the host environment image repository by, for each of a plurality of codes: performing an execution the code on the host computing environment; using a software profiling tool to generate a software profiling report of the execution, in the report format; generating a host environment image encoding, in the standardised format, the software profiling report; and adding the host environment image to the host environment image repository with an identifier for the code.

The host environment image repository may be added to whenever a software profiling tool is used to monitor an execution in the execution environment. It is noted that the labels "host" and "target" with respect to computing environments are context-specific and a computing environment that is a host in one transaction may be a target in another, and vice-versa.

Embodiments may further comprise populating the target environment image repository by, for each of a plurality of codes: performing an execution the code on the target computing environment; using a software profiling tool to generate a software profiling report of the execution, in the report format; generating a target environment image encoding, in the standardised format, the software profiling report; and adding the target environment image to the target environment image repository with an identifier for the code.

The target environment image repository may be added to whenever a software profiling tool is used to monitor an execution in the execution environment. There may be instances in which there are not sufficient, or any, images in the host environment image repository for the computer-implemented image processing method to be performed. In such circumstances, the subject code is, in fact, executed on the target computing environment, and a target environment image generated and added to the target environment image repository.

Embodiments may comprise performing the computer-implemented method of an embodiment with each of a plurality of different computing environments as the target computing environment, and selecting a computing environment, from among the plurality of different computing environments, to host the code for future executions, the selecting being based on the output predicted software profiling reports and in accordance with a computing environment selection policy.

Such methods leverage the computer-implemented method of embodiments to select a computing environment to which to port code for future executions out of a plurality of potential destinations. The selection policy may be specified by a user in advance of the method being performed, or in response to being presented with information (such as the predicted software profiling reports) or a prompt. Advantageously, embodiments allow for a plurality of potential destination computing environments to be compared in terms of execution performance of the subject code, without needing to execute the subject code on those potential destination computing environments.

Embodiments may comprise performing the computer-implemented method of an embodiment with each of a plurality of different codes as the subject code, and selecting a code, from among the plurality of different codes, to transfer to the target computing environment for future executions, the selecting being based on the output predicted software profiling reports and in accordance with a code selection policy.

For example, it may be that the plurality of different codes perform equivalent or comparable functions, so that a required or desired function is performed by any one of the plurality of different codes, and the method is performed in order to identify the code best suited (according to the selection policy) to perform the function on the target computing environment.

Optionally, the computing environment selection policy or the code selection policy is to minimise execution time.

Embodiments of another aspect include processor hardware coupled to memory hardware, the memory hardware storing processing instructions which, when executed by the processor hardware, cause the processor hardware to implement a method for predicting execution performance metrics for a subject code on a target computing environment, the method comprising: obtaining target environment member images each encoding, in a standardised format, a software profiling report of an execution on the target computing environment of a member of a set of codes, the software profiling report being output by a software profiling tool and in a report format comprising a value of each of a plurality of labelled execution performance metrics, wherein the members of the set of codes are selected by: obtaining a software profiling report of an execution of the subject code on a host computing environment currently hosting the subject code, the software profiling report being output by a software profiling tool and in accordance with the report format, generating a host environment subject image encoding, in the standardised format, the obtained software profiling report, storing in a host environment image repository images encoding, in the standardised format, software profiling reports of executions on the host computing environment of respectively identified codes, storing in a target environment image repository, images encoding, in the standardised format, software profiling reports of executions on the target computing environment of respectively identified codes, querying the host environment image repository and the target environment image repository to identify, as candidate codes, codes in respect of which images are stored in both the host environment image repository and the target environment image repository, and determining the n most similar images to the host environment subject image from among host environment candidate images, host environment candidate images being the images stored in the host environment image repository in respect of the candidate codes, and selecting as the members of the set of codes the candidate codes in respect of which the n most similar images are stored; combining the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes; processing the combined target environment member image by decoding the combined target environment member image to extract a predicted software profiling report, and outputting the predicted software profiling report.

The method for predicting execution performance metrics for a subject code on a target computing environment may comprise the features of any of the computer-implemented method embodiments.

Embodiments of another aspect include a computer program which, when executed by a computer processor, causes the computer processor to implement a method for predicting execution performance metrics for a subject code on a target computing environment, the method comprising: obtaining target environment member images each encoding, in a standardised format, a software profiling report of an execution on the target computing environment of a member of a set of codes, the software profiling report being output by a software profiling tool and in a report format comprising a value of each of a plurality of labelled execution performance metrics, wherein the members of the set of codes are selected by: obtaining a software profiling report of an execution of the subject code on a host computing environment currently hosting the subject code, the software profiling report being output by a software profiling tool and in accordance with the report format, generating a host environment subject image encoding, in the standardised format, the obtained software profiling report, storing in a host environment image repository images encoding, in the standardised format, software profiling reports of executions on the host computing environment of respectively identified codes, storing in a target environment image repository, images encoding, in the standardised format, software profiling reports of executions on the target computing environment of respectively identified codes, querying the host environment image repository and the target environment image repository to identify, as candidate codes, codes in respect of which images are stored in both the host environment image repository and the target environment image repository, and determining the n most similar images to the host environment subject image from among host environment candidate images, host environment candidate images being the images stored in the host environment image repository in respect of the candidate codes, and selecting as the members of the set of codes the candidate codes in respect of which the n most similar images are stored; combining the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes; processing the combined target environment member image by decoding the combined target environment member image to extract a predicted software profiling report, and outputting the predicted software profiling report.

Again, the method for predicting execution performance metrics for a subject code on a target computing environment may comprise the features of any of the computer-implemented method embodiments.

The computer program may be in the form of a computer-readable medium storing processing instructions for implementing the method for predicting execution performance metrics for a subject code on a target computing environment. The computer-readable medium may be non-transitory.

### LIST OF FIGURES

A detailed description of embodiments will now be provided, by way of example, with reference to the accompanying drawings, in which:
Figure 1 illustrates an existing technique for assessing performance of code on a new computing environment;
Figure 2 illustrates a computer-implemented image processing method for predicting a software profiling report;
Figure 3 illustrates a computer-implemented method including finding a set of codes similar to the subject code;
Figures 4A and 4B illustrate processes for populating the image repositories and constructing the combined target environment member image;
Figures 5A and 5B illustrate target environment member images;
Figure 6 illustrates a computer-implemented image processing method alternative to that of Figure 3;
Figure 7 illustrates a hardware configuration of an embodiment.

### DETAILED DESCRIPTION

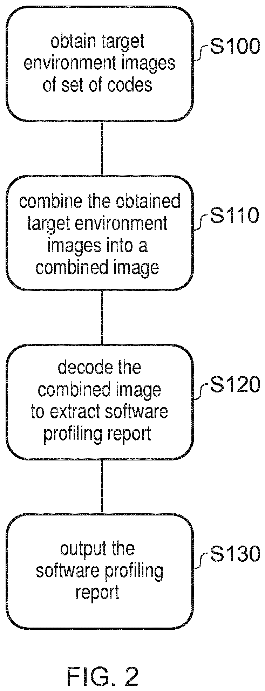

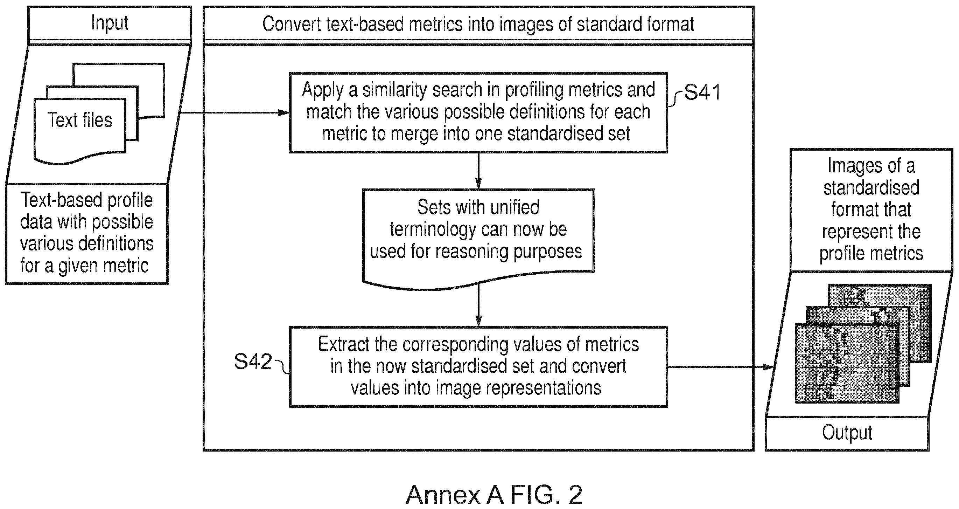

Figure 2 illustrates a computer-implemented method for predicting execution performance metrics for a subject code on a target computing environment. The subject code is software code, and is an executable or application. The subject code is presently hosted by (i.e. stored ready for execution on) a host computing environment. A target computing environment different from the host computing environment is identified as a potential destination to which the subject code may be copied or ported for execution thereon. However, it is desirable to assess how the differences between the host computing environment and the target computing environment will influence execution performance.

At step S100, images encoding software profiling reports for executions of codes on the target computing environment are obtained. Software profiling reports are output by software profiling tools and are in a report format comprising a value of each of a plurality of labelled execution performance metrics. In other words, software profiling report is used as a term to refer to a collection of values of labelled execution performance metrics. The conversion from software profiling report to image is detailed in German patent application no. 102016223484.6. The conversion may be performed as part of the present computer-implemented method, or it may have been carried out previously and the image or images so obtained stored in a repository. The images are in a standardised format, standardised across the images regardless of code, computing environment, or software profiling tool.

The images may be specifically selected based on the codes whose executions are represented. For example, it may be that codes having similarity to the subject code are identified, from among the codes for which executions on the target computing environment are encoded in stored images, and the stored images for those codes selected. The similarity may be based on similarities in the code per se, or in similarities in executions of the codes on another computing environment, such as the host computing environment.

The codes for which executions on the target computing environment are represented in the obtained images may be referred to as a set of codes. The set of codes comprises more than one code. The obtained images may be referred to as target environment member images, wherein the "target environment" denotes (in the context of a particular instance of the method) the computing environment on which the executions represented by the images were performed, and the "member" denotes that the executed code is a member of the set of codes.

At step S110, the obtained target environment member images are combined into a combined target environment member image. The combination preserves the format of the composite images, so that target environment member images and the combined target environment member image all conform to the standardised format.

The combination takes a weighted contribution from each of the target environment member images, wherein the combined target environment member image is closer in appearance to composite images with higher weightings than to those with lower weightings. For example, the combination may be performed by taking a weighted average of pixel values on a pixel-by-pixel basis. For example, the pixel value may be the colour value (that is, the intensity of the or each colour) of the pixel as a single value (grayscale/monochrome) or as each of three values in a three-value-vector (RGB). In the RGB case, separate weighted averages are performed for each of R, G, and B.

At step S120, the combined target environment image is processed by a decoder to extract a predicted software profiling report. The decoder is trained to convert image features into values of execution performance metrics, to infer from the position or arrangement of image features the labels of the performance metrics to which the values relate, and to combine the labels and values into a software profiling report of a format comprising values of labelled execution performance metrics. The decoder may be, for example, an autoencoder, operable in both a feed-forward (software profiling report to image) and feed-backward (image to software profiling report) mode.

At step S130 the predicted software profiling report is outputed. The output may be to a user of the method, which may be a human user via a user interface such as a GUI, or the user may be another application, or the output may be to a software entity using the predicted software profiling report to determine to which computing environment to transfer the subject code.

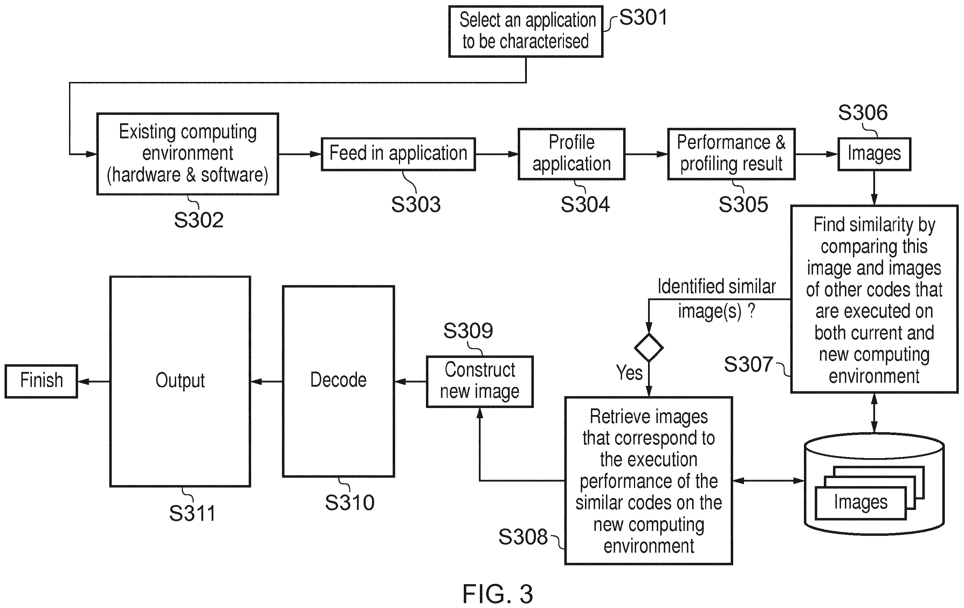

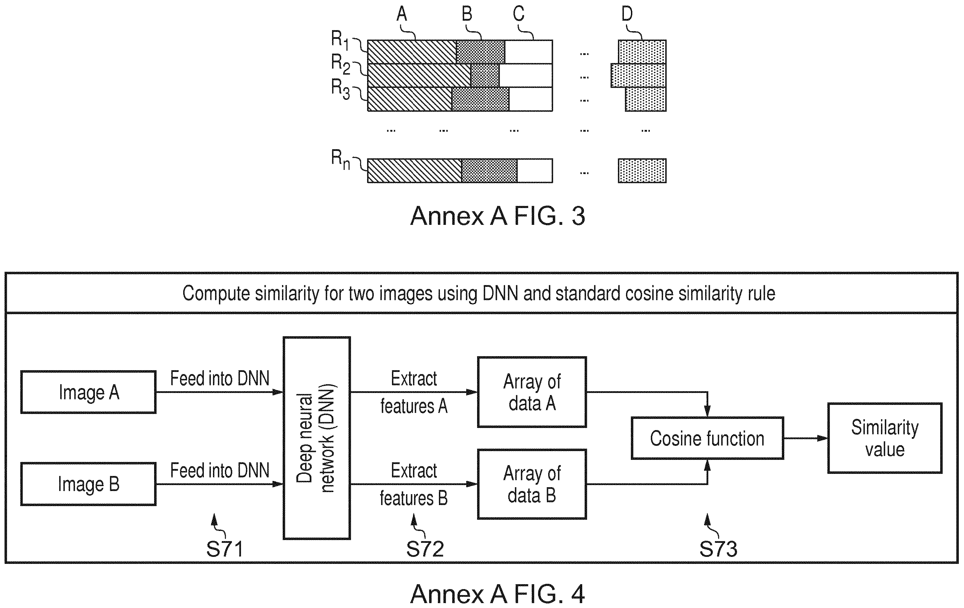

Figure 3 illustrates a computer-implemented method which includes a process for finding a set of codes that are considered to be similar to the subject code, and for which images encoding software profiling reports of executions on the target or new computing environment are available.

In S301 an application to be characterised is selected. The application is an example of a subject code. Characterised means execution performance being characterised via the computer-implemented method. At S302 a computing environment already hosting the application is identified, and at S303 the application is loaded ready for execution. Preparatory steps S301 to S303 could be omitted depending on the implementation scenario. It may be that the application being selected and the loading for execution all occur as inherent parts of S304.

At S304 the application is executed on the host (existing) computing environment. The execution of the code is accompanied by a software profiling tool (profiler) for extracting values of execution performance metrics representing the execution. It is noted that steps S301 to S304 are optional. It may be the case that a software profiling report is already stored in relation to an execution of the subject code on the host computing environment, and can be retrieved from storage.

At S305 the software profiling report comprising the values of the execution performance metrics representing the execution is collected. Information included in the software profiling report includes values of execution performance metrics including memory usage, time complexity, usage of particular instructions, the frequency and duration of function calls. In addition, for a parallel execution environment, the software profiling report may include information on the frequency and duration of communication functions. At S306 the values for each of a plurality of execution performance metrics, which may include one or more of those listed above, are retrieved from the text-based files output by one or more software profiling tools, and encoded as a representative image of a standardised format (standardised across profilers, computing environments, and codes). A process for encoding a software profiling report as an image is disclosed in German patent application no. 102016223484.6, which process could be used at S306. The process is explained in more detail in Annex A, below. The image may be referred to as a host environment subject image, wherein the "host environment" denotes that the image represents an execution of the code on the existing or current computing environment hosting the code, and the "subject" denotes that the code is the subject code. It may be an image repository storing images encoding software profiling reports of executions of code on the host computing environment stores an already-generated image encoding a software profiling report of an execution of the subject code on the host environment, in which case the image can be retrieved from the repository and need not be generated.

At S307, a similarity check is invoked on the host environment subject image with other images that encode the software profiling reports of other codes on the host computing environment, and are stored in an image repository, in order to identify other similar codes that have been executed on both the host (existing) and target (new) computing environments, or are being executed and reports generated during execution. The similarity check includes querying a host environment image repository, storing images encoding, in the standardised format, software profiling reports of executions on the host computing environment of respectively identified codes; querying a target environment image repository, storing images encoding, in the standardised format, software profiling reports of executions on the target computing environment of respectively identified codes; to identify, as candidate codes, codes in respect of which images are stored in both the host environment image repository and the target environment image repository. In other words, the candidate codes are those codes that have been profiled executing on both the host computing environment and the target computing environment. For example, it may be that, in a preparatory phase, or, for example, during a system idle time in which resource usage is low, codes are executed and profiled on computing environments available for hosting code within the network, so that the repositories exist when required by the computer-implemented method. The codes used to populate the repositories may be selected strategically to ensure that a code population is sampled representatively or comprehensively.

Once the candidate codes have been identified the n most similar images to the host environment subject image from among host environment candidate images, host environment candidate images being the images stored in the host environment image repository in respect of the candidate codes, are found. The n most similar images are selected as the members of the set of codes, which are the codes whose executions on the target computing environment are used as the basis of the combined image (that is eventually decoded to obtain the predicted execution performance metrics for the subject code).

Once a number n of most similar images to the image that encodes the execution performance metrics of the subject code and corresponding images of other codes (members of the set of codes) is identified, the process of predicting the execution performance of the subject code on the target computing environment (hardware/software) is invoked as follows. At S308 images that encode software profiling reports of executions of members of the set of codes on the target computing environment are retrieved from an image repository and at S309 used to construct a combined image that can be used to predict the execution performance of the subject code, for example, via feeding into an autoencoder based neural network. The counterpart image may be referred to as a combined target environment member image. S308 is an example of step S100, and S309 is an example of S110.

At step S310, an autoencoder based artificial neural network (an autoencoder) is applied to the combined image to decode or extract a software profiling report in the form of values of labelled execution performance metrics from the image.

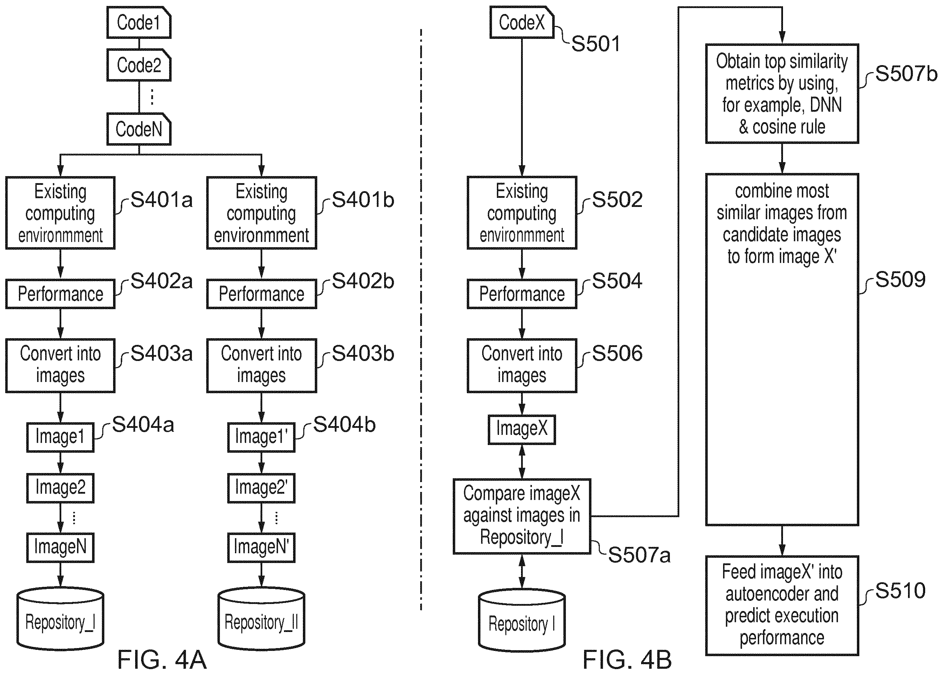

At S311 the extracted software profiling report is output
Figures 4A and 4B outline the procedures for populating the image repositories and constructing the combined target environment member image.

Figure 4A illustrates the creation of two image repositories: Repository_I (host environment image repository) and Repository_II (target environment image repository) that store images that represent the execution performance of identified codes on the existing and new computing environments, respectively, by encoding software profiling reports of the executions. At step S401a and S401b the software codes are loaded onto the host computing environment and target computing environment respectively. At S402a and S402b the executions of the codes on the respective computing environments are performed in association with a software profiling tool. At steps S403a and S403b the software profiling reports corresponding to each execution are encoded as an image of the standardised format. At steps S404a and S404b the images so produced are added to the respective repository, along with an identifier of he executed code. Each execution of a code onto will therefore generate two images, imageK and imageK', K, K' =1,..,N, that are stored in Repository_I and Repository_II, respectively, and correspond to the execution of codes with identifiers CodeK, K=1,..,N.

Figure 4B illustrates the procedure for creating the combined target environment member image. CodeX is the identifier for the subject code in this example.

At S501 a subject code, CodeX, is identified as code for which an indication of execution performance on the target computing environment (which is a computing environment other than and having a different hardware and/or software configuration from the current host computing environment) is required. S501 is an example of S301. At S502 the subject code is prepared for execution on the host computing environment. Step S502 is an example of steps S302-S303. At S504 the subject code is executed on the existing (i.e. the host) computing environment and a software profiling tool is used to generate values of labelled execution performance metrics representing the performance. Step S504 is an example of steps S304-S305. An image is generated that represents the execution by encoding the values of the labelled execution performance metrics as an image of the standardised format at S506. S506 is an example of S306. The image is referred to as imageX to indicate its correspondence to codeX, the subject code.

At S507a and S507b imageX is compared against images that are stored in Repository_I for a similarity check using; for example, a deep neural network (DNN) and a cosine rule. Steps S507a and S507b are collectively exemplary of step S307. The purpose of using a DNN is for feature extraction. The standard cosine rule is used as a similarity function to generate a similarity score. Cosine rule is a widely-used method for measuring the similarity between two data vectors. Using the DNN and cosine rule, the computer-implemented method automatically detects and quantifies similarity between imageX and images stored in repository_I.

Thereafter, at step S509, from the images having the greatest similarity scores based on comparison with imageX, a new image (imageX', exemplary of the combined target environment member image) is constructed that is regarded a counterpart to imageX. The images that are combined to form imageX' are those that correspond to the images having the greatest similarity scores from Repository_I when compared with imageX, and for which the codes have been executed on the target computing environment, and images representing the executions on the target computing environment are stored in Repository_II. Step S509 is an example of S309.

For example, the construction of the new image, imageX', is obtained by applying a multiplying factor, here named similarity factor, SF, equal or proportional to that of the similarity scores of the identified most similar images in Repository_I (i.e. the host environment member images); however, the multiplying factors are applied to the counterpart images in Repository_II (i.e. the target environment member images), The counterpart images are combined according to their respective multiplying factors to obtain the new image, imageX'.

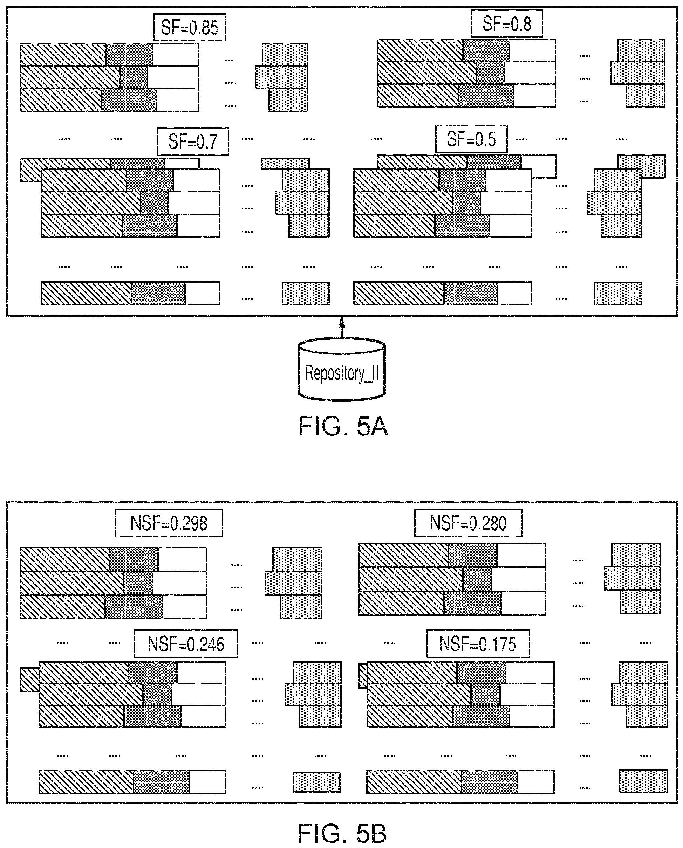

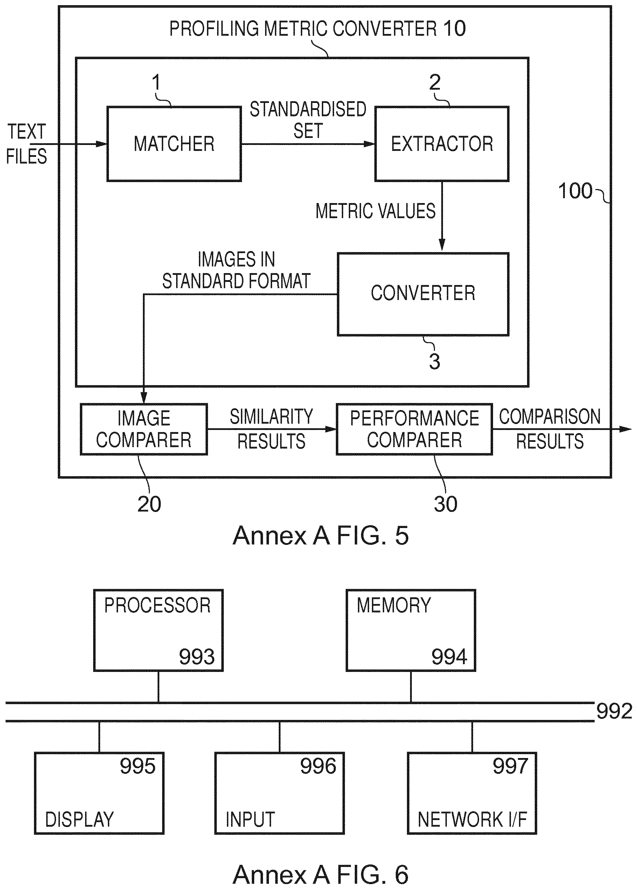

An example to this process is shown in Figures 5A and 5B, where the four counterpart images (exemplary of target environment member images) from Repository_II are retrieved with their SFs quoted for each corresponding image in Figure 5A. The individual similarity scores of the four counterpart images are used to weight their contributions to the combined image. In this case, the total contribution of these to SFs adds to 0.85 + 0.8 + 0.7 + 0.5 = 2.85. Therefore the normalised SF (NSF) contributions are [0.85, 0.8, 0.7, 0.5] / 2.85 = [0.298, 0.280, 0.246, 0.175] for each image, respectively, as also quoted for each corresponding image in Figure 5B. Note that these normalised contributions now add up to unity. The counterpart images, retrieved from Repository_II, are combined into one image, imageX', by a weighted average of weighted contributions proportional to the now normalised SF from the counterpart images to ultimately obtain the combined target environment member image, imageX'.

Thereafter, at step S510, to predict the execution performance of CodeX on the target computing environment, imageX' is fed into a specifically trained neural network based on an autoencoder, and values of execution performance metrics extracted. Step S510 is exemplary of step S310.

By making use of the similarities between images encoding executions of codes on the host computing environment, the computer-implemented method automatically predicts the execution performance of the subject code on the target computing environment, via applying an autoencoder based neural network. This process is regarded a form of feature extraction algorithm of the images representing executions of the set of codes identified as being most timilar to the subject code, based on executions on the host computing environment, with a purpose to construct a combined image that represents the execution performance of the subject code on the target execution environment composed of images representing executions of members of the set of codes on the target computing environment.

It is noted that there exist various possible ways for decoding images that could be used at steps S310 and S510. Embodiments may apply autoencoder based neural network mechanisms (autoencoders_. Autoencoders are extremely robust for encoding and decoding images, at the same time they act as an effective technique for capturing the importance in characteristics of the entire image. Further, there exist several examples that employ autoencoders within a deep neural network (DNN) as a machine learning strategy. These autoencoders and DNNs are typically trained for image recognition via supervised learning. A similar approach is also used for the training process of the autoencoder based neural network in embodiments; however, the training process is specifically tailored for autoencoding the execution performance metrics that represent execution performance of codes and are constructed from images in the standardised image format. Therefore, when the combined image is generated; it is fed into the autoencoder based neural network in order to produce a prediction of the execution performance of the subject code on the target computing environment.

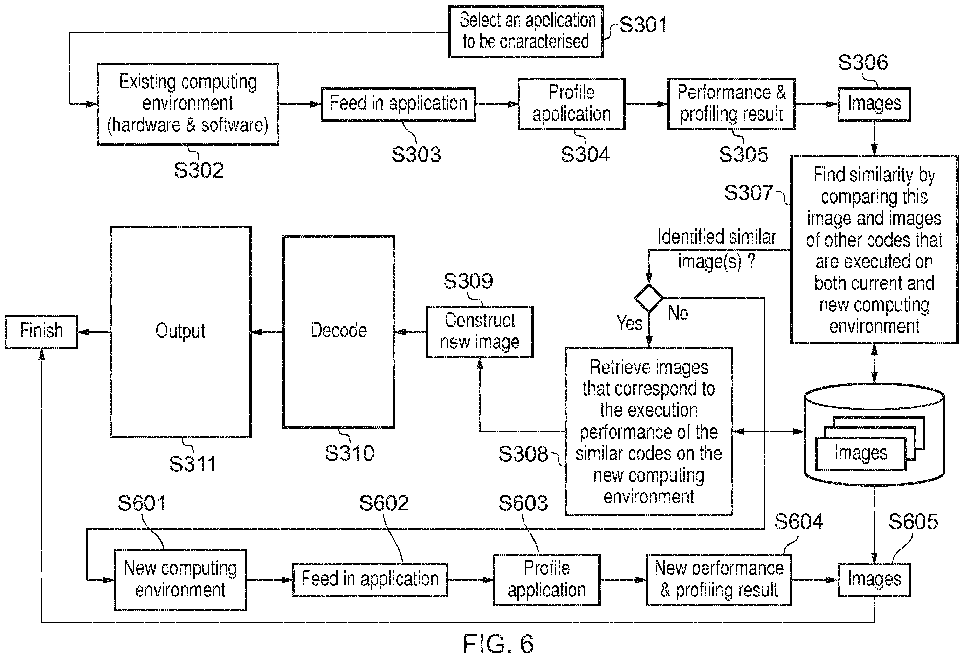

Figure 6 illustrates an embodiment which deals with a scenario in which there have not been sufficient executions of codes on the host computing environment and the target computing environment for there to be candidate codes that have already had executions profiled on both the target and the host computing environment (and optionally there are sufficient numbers but not enough of those that exceed a similarity score threshold when the host environment candidate image are compared with the host environment subject image). However, if no high quality matches are identified, then no prediction is applied. Instead, the process shown as steps S601 to S605 of Figure 6 is invoked in order to convert the execution performance metrics of the subject code on the target computing environment into an image of the standardised format for storage in the repository and use in future predictions. The image is stored with an identifier for the code in order to enrich and diversify content of the image repositories that are responsible for storing all known possible execution performances of codes.

Like reference numerals denote steps equivalent to the example of Figure 3.

At step S601 the target computing environment is initialised, and at S602 the subject software code is loaded onto the target computing environment. At S603 the execution of the subject software code on the target computing environment is performed in association with a software profiling tool. At step S604 the software profiling report corresponding to the execution is encoded as an image of the standardised format. At step S605 the image so produced is added to the image repository, along with an identifier of the executed code.

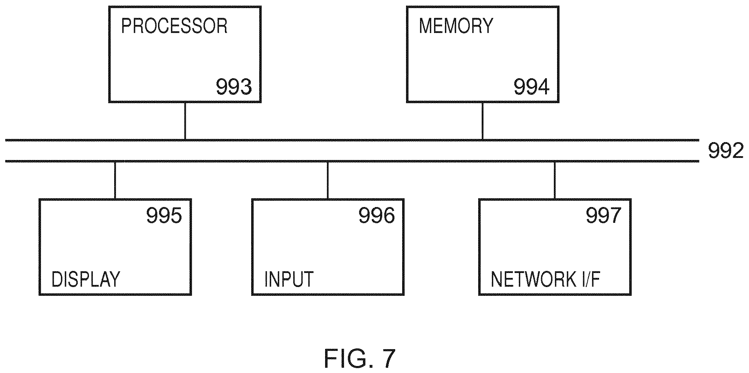

FIGURE 7 is a block diagram of a computing device, such as a computing environment, a member of a computing environment, a computer network control entity, or a data storage server, which embodies the present invention, and which may be used to implement a method of an embodiment of, for example, Figure 2, Figure 3, Figure 4, and/or Figure 6. The computing device comprises a processor 993, and memory, 994. Optionally, the computing device also includes a network interface 997 for communication with other computing devices, for example with other computing environments of invention embodiments.

For example, an embodiment may be composed of a network of such computing devices, separate subsets of devices within the network being individual computing environments. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the computer-implemented methods set out in Figures 2, 3, 4, and/or 6, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Each of the method steps of Figures 2, 3, 4, and/or 6, may be executed by a processor 993 (or plurality thereof) executing processing instructions (a program) stored on a memory 994 and exchanging data via a network I/F 997 where necessary, for example, to port code between computing environments.

In particular, the processor 993 executes processing instructions to receive, via the network I/F, target environment member images of the set of codes from an image repository, as in step S100 of Figure 2, S308 of Figure 3, and/or S508 of Figure 4B. Furthermore, the processor 993 may execute processing instructions to store the retrieved images on a connected storage unit and/or to transmit, via the network I/F 997, the retrieved images to another computing device for combination.

A processor 993 executes processing instructions to receive, via the network I/F, the retrieved images from a computing device implementing step S100/S308/S508 and combine the images to form a combined image, as in step S110 of Figure 2, S309 of Figure 3, and/or S509 of Figure 4B. Furthermore, the processor 993 may execute processing instructions to store the combined image on a connected storage unit and/or to transmit, via the network I/F 997, the combined image to another computing device for decoding.

A processor 993 executes processing instructions to receive, via the network I/F, the combined image from a computing device implementing step S110/S309/S509 and decode the image to extract a software profiling report, as in step S120 of Figure 2, step S310 of Figure 3, and/or step S510 of Figure 4B. Furthermore, the processor 993 may execute processing instructions to store the extracted software profiling report on a connected storage unit and/or to transmit, via the network I/F 997, the extracted software profiling report to an end user or to a network controller for use in allocating the subject code to a computing environment for future executions.

A processor 993 executes processing instructions to receive, via the network I/F, the decoded software profiling report from a computing device implementing step S120/S310/S510 and output the report, as in step S130 of Figure 2, step S311 of Figure 3, and/or step S511 of Figure 4B. The output may be to a control mechanism that uses information in the report, optionally in combination with information from other decoded software profiling reports, to determine a computing environment to which to transmit the subject code for storage and execution.

Methods embodying the present invention may be carried out on a computing device such as that illustrated in Figure 7. Such a computing device need not have every component illustrated in Figure 7, and may be composed of a subset of those components. A method embodying the present invention may be carried out by a single computing device in communication with one or more data storage servers via a network. The computing device may be a data storage itself storing the subject code, and optionally also the decoder.

A method embodying the present invention may be carried out by a plurality of computing devices operating in cooperation with one another. One or more of the plurality of computing devices may be a data storage server storing at least a portion of the subject code, and optionally also the decoder.

The above mentioned *German patent application no.* 102016223484.6 is entitled: *Determining Similarities in Computer Software Codes for Performance Analysis.*

## Claims

1. A computer-implemented image processing method for predicting execution performance metrics for a subject code on a target computing environment, comprising:
obtaining target environment member images each encoding, in a standardised format, a software profiling report of an execution on the target computing environment of a member of a set of codes, the software profiling report being output by a software profiling tool and in a report format comprising a value of each of a plurality of labelled execution performance metrics, wherein the members of the set of codes are selected by:
obtaining (S305) a software profiling report of an execution of the subject code on a host computing environment currently hosting the subject code, the software profiling report being output by a software profiling tool and in accordance with the report format,
generating (S306) a host environment subject image encoding, in the standardised format, the obtained software profiling report,
storing in a host environment image repository images encoding, in the standardised format, software profiling reports of executions on the host computing environment of respectively identified codes,
storing in a target environment image repository, images encoding, in the standardised format, software profiling reports of executions on the target computing environment of respectively identified codes;
querying (S307) the host environment image repository and the target environment image repository to identify, as candidate codes, codes in respect of which images are stored in both the host environment image repository and the target environment image repository, and
determining (S308) the n most similar images to the host environment subject image from among host environment candidate images, host environment candidate images being the images stored in the host environment image repository in respect of the candidate codes, and selecting as the members of the set of codes the candidate codes in respect of which the n most similar images are stored;
combining (S309) the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes;
processing (S310) the combined target environment member image by decoding the combined target environment member image to extract a predicted software profiling report, and outputting (S311) the predicted software profiling report.

2. The computer-implemented image processing method according to claim 1, wherein determining the n most similar images to the subject image from among the host environment candidate images comprises:
using a deep neural network as a feature extractor to extract features from the subject image and from the host environment candidate images;
comparing (S507a) the extracted features from the subject image with the extracted features from each of the host environment candidate images individually to obtain a similarity score quantifying similarity between the features extracted from the first image and each of the host environment candidate images;
finding (S507b) the n greatest similarity scores, and determining the respective images to be the n most similar images to the first image.

3. The computer-implemented image processing method according to any of the preceding claims, wherein the decoding includes feeding (S510) the single new image into an autoencoder artificial neural network trained to extract software profiling reports from images conforming to the standardised format.

4. The computer-implemented image processing method according to any of the preceding claims wherein the plurality of labelled profiling metrics include information on memory usage, time complexity, usage of particular instructions, frequency and/or duration of function calls, and information on the frequency and/or duration of communication calls in a parallel environment, the form of the label in each case being determined by the software profiling tool.

5. The computer-implemented image processing method according to any of the preceding claims, further comprising populating the host environment image repository by, for each of a plurality of codes:
performing (S401a) an execution of the code on the host computing environment;
using (S402a) a software profiling tool to generate a software profiling report of the execution, in the report format;
generating (S403a) a host environment image encoding, in the standardised format, the software profiling report; and
adding (S404a) the host environment image to the host environment image repository with an identifier for the code.

6. The computer-implemented image processing method according to any of the preceding claims, further comprising populating the target environment image repository by, for each of a plurality of codes:
performing (S401b) an execution of the code on the target computing environment;
using (S402b) a software profiling tool to generate a software profiling report of the execution, in the report format;
generating (S403b) a target environment image encoding, in the standardised format, the software profiling report; and
adding (S404b) the target environment image to the target environment image repository with an identifier for the code.

7. A computer-implemented method, comprising performing the computer-implemented method of any of the preceding claims with each of a plurality of different computing environments as the target computing environment, and
selecting a computing environment, from among the plurality of different computing environments, to host the code for future executions, the selecting being based on the output predicted software profiling reports and in accordance with a computing environment selection policy.

8. A computer-implemented method, comprising performing the computer-implemented method of any of claims 1 to 6 with each of a plurality of different codes as the subject code, and
selecting a code, from among the plurality of different codes, to transfer to the target computing environment for future executions, the selecting being based on the output predicted software profiling reports and in accordance with a code selection policy.

9. The computer-implemented method according to claim 7 or 8, wherein
the computing environment selection policy or the code selection policy is to minimise execution time.

10. Processor hardware coupled to memory hardware, the memory hardware storing processing instructions which, when executed by the processor hardware, cause the processor hardware to implement a method for predicting execution performance metrics for a subject code on a target computing environment, the method comprising:
obtaining target environment member images each encoding, in a standardised format, a software profiling report of an execution on the target computing environment of a member of a set of codes, the software profiling report being output by a software profiling tool and in a report format comprising a value of each of a plurality of labelled execution performance metrics, wherein the members of the set of codes are selected by:
obtaining (S305) a software profiling report of an execution of the subject code on a host computing environment currently hosting the subject code, the software profiling report being output by a software profiling tool and in accordance with the report format,
generating (S306) a host environment subject image encoding, in the standardised format, the obtained software profiling report,
storing in a host environment image repository images encoding, in the standardised format, software profiling reports of executions on the host computing environment of respectively identified codes,
storing in a target environment image repository, images encoding, in the standardised format, software profiling reports of executions on the target computing environment of respectively identified codes;
querying (S307) the host environment image repository and the target environment image repository to identify, as candidate codes, codes in respect of which images are stored in both the host environment image repository and the target environment image repository, and
determining (S308) the n most similar images to the host environment subject image from among host environment candidate images, host environment candidate images being the images stored in the host environment image repository in respect of the candidate codes, and selecting as the members of the set of codes the candidate codes in respect of which the n most similar images are stored;
combining (S309) the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes;
processing (S310) the combined target environment member image by decoding the combined target environment member image to extract a predicted software profiling report, and outputting (S311) the predicted software profiling report.

11. A computer program which, when executed by a computer processor, causes the computer processor to implement a method for predicting execution performance metrics for a subject code on a target computing environment, the method comprising:
obtaining target environment member images each encoding, in a standardised format, a software profiling report of an execution on the target computing environment of a member of a set of codes, the software profiling report being output by a software profiling tool and in a report format comprising a value of each of a plurality of labelled execution performance metrics, wherein the members of the set of codes are selected by:
obtaining (S305) a software profiling report of an execution of the subject code on a host computing environment currently hosting the subject code, the software profiling report being output by a software profiling tool and in accordance with the report format,
generating (S306) a host environment subject image encoding, in the standardised format, the obtained software profiling report,
storing in a host environment image repository images encoding, in the standardised format, software profiling reports of executions on the host computing environment of respectively identified codes,
storing in a target environment image repository, images encoding, in the standardised format, software profiling reports of executions on the target computing environment of respectively identified codes;
querying (S307) the host environment image repository and the target environment image repository to identify, as candidate codes, codes in respect of which images are stored in both the host environment image repository and the target environment image repository, and
determining (S308) the n most similar images to the host environment subject image from among host environment candidate images, host environment candidate images being the images stored in the host environment image repository in respect of the candidate codes, and selecting as the members of the set of codes the candidate codes in respect of which the n most similar images are stored;
combining (S309) the obtained target environment member images into a combined target environment member image conforming to the standardised format, the combination being based on a weighted contribution from each of the obtained target environment member images, the weighting being proportional to a similarity metric quantifying similarity between the subject code and the respective member of the set of codes;
processing (S311) the combined target environment member image by decoding the combined target environment member image to extract a predicted software profiling report, and outputting the predicted software profiling report.

12. A computer-readable medium storing processing instructions for implementing the computer program of claim 11.

13. A computer-readable medium according to claim 12, wherein the computer-readable medium is non-transitory.

## Patentansprüche

1. Computerimplementiertes Bildverarbeitungsverfahren zur Vorhersage von Ausführungsleistungskennzahlen für einen Objektcode in einer Zielcomputerumgebung, umfassend:
Erhalten von Zielumgebungsmitgliedsbildern, die jeweils einen Software-Profilierungs-Bericht einer Ausführung in der Zielcomputerumgebung eines Mitglieds eines Satzes von Codes in einem standardisierten Format codieren, wobei der Software-Profilierungs-Bericht durch ein Software-Profilierungs-Werkzeug und in einem Berichtsformat, das einen Wert von jeder von mehreren gekennzeichneten Ausführungsleistungskennzahlen umfasst, ausgegeben wird, wobei die Mitglieder des Satzes von Codes ausgewählt werden durch:
Erhalten (S305) eines Software-Profilierungs-Berichts einer Ausführung des Objektcodes in einer Host-Computerumgebung, die gegenwärtig den Objektcode hostet, wobei der Software-Profilierungs-Bericht von einem Software-Profilierungs-Werkzeug und in Übereinstimmung mit dem Berichtsformat ausgegeben wird;
Erzeugen (S306) eines Hostumgebungsobjekts, das den erhaltenen Software-Profilierungs-Bericht in dem erhaltenen Format codiert,
Speichern, in einem Hostumgebungs-Bildrepository, von Bildern, die Software-Profilierungs-Berichte von Ausführungen in der Host-Computerumgebung von jeweiligen identifizierten Codes in dem standardisierten Format codieren;
Speichern, in einem Zielumgebungs-Bildrepository, von Bildern, die Software-Profilierungs-Berichte von Ausführungen in der Zielcomputerumgebung von jeweils identifizierten Codes in dem standardisierten Format codieren;
Abfragen (S307) des Hostumgebungs-Bildrepositorys und des Zielumgebung-Bildrepositorys, um Codes, bezüglich derer Bilder sowohl in dem Hostumgebungs-Bildrepository als auch in dem Zielumgebungs-Bildrepository gespeichert sind, als Kandidatencodes zu identifizieren, und
Bestimmen (S308) der n dem Hostumgebungs-Objektbild ähnlichsten Bilder aus Hostumgebungs-Kandidatenbildern, wobei Hostumgebungs-Kandidatenbilder Bilder sind, die in dem Hostumgebungs-Bildrepository in Bezug auf die Kandidatencodes gespeichert sind, und Auswählen, als Mitglieder des Satzes von Codes, der Kandidatencodes, bezüglich derer die n ähnlichsten Bilder gespeichert sind;
Kombinieren (S309) der erhaltenen Zielumgebungsmitgliedsbilder zu einem kombinierten Zielumgebungsmitgliedsbild, das dem standardisierten Format entspricht, wobei die Kombination auf einem gewichteten Beitrag von jedem der erhaltenen Zielumgebungsmitgliedsbilder basiert, wobei die Gewichtung proportional zu einer Ähnlichkeitskennzahlquantifizierungs-Ähnlichkeit zwischen dem Objektcode und dem jeweiligen Mitglied des Satzes von Codes ist;
Verarbeiten (S310) des kombinierten Zielumgebungsmitgliedsbilds durch Decodieren des kombinierten Zielumgebungsmitgliedsbilds, um einen vorhergesagten Software-Profilierungs-Berichts zu extrahieren, und Ausgeben (S311) des vorhergesagten Software-Profilierungs-Berichts.

2. Computerimplementiertes Bildverarbeitungsverfahren nach Anspruch 1, wobei das Bestimmen der n dem Objektbild ähnlichsten Bilder aus den Hostumgebungs-Kandidatenbildern umfasst:
Verwenden eines tiefen neuronalen Netzwerks als Merkmalsextraktor zum Extrahieren von Merkmalen aus dem Objektbild und aus den Hostumgebungs-Kandidatenbildern;
Vergleichen (S507a) der aus dem Objektbild extrahierten Merkmale mit den extrahierten Merkmalen aus jedem der Hostumgebungs-Kandidatenbilder einzeln, um eine Ähnlichkeitsbewertung zu erhalten, die die Ähnlichkeit zwischen den aus dem ersten Bild und den aus jedem der Hostumgebungs-Kandidatenbilder extrahierten Merkmalen quantifiziert;
Finden (S507b) der n größten Ähnlichkeitsbewertungen, und Bestimmen der jeweiligen Bilder als die n dem ersten Bild ähnlichsten Bilder.

3. Computerimplementiertes Bildverarbeitungsverfahren nach einem der vorhergehenden Ansprüche, wobei das Decodieren Zuführen (S510) des einzelnen neuen Bildes in ein künstliches neuronales Autoencoder-Netzwerk aufweist, das darauf trainiert ist, Software-Profilierungs-Berichte aus Bildern zu extrahieren, die dem standardisierten Format entsprechen.

4. Computerimplementiertes Bildverarbeitungsverfahren nach einem der vorhergehenden Ansprüche, wobei die mehreren gekennzeichneten Profilierungskennzahlen Informationen über eine Speichernutzung, Zeitkomplexität, Verwendung bestimmter Anweisungen, Häufigkeit und/oder Dauer von Funktionsaufrufen, und Informationen über eine Häufigkeit und/oder Dauer von Kommunikationsanrufen in einer parallelen Umgebung aufweisen, wobei die Form der Kennzeichnungen in jedem Fall durch das Software-Profilierungs-Werkzeug bestimmt wird.

5. Computerimplementiertes Bildverarbeitungsverfahren gemäß einem der vorhergehenden Ansprüche, ferner umfassend Bevölkern des Hostumgebung-Bildrepositorys durch, für jeden von mehreren Codes:
Durchführen (S401a) einer Ausführung des Codes in der Hostcomputerumgebung;
Verwenden (S402a) eines Software-Profilierungs-Werkzeugs zum Erzeugen, in dem Berichtsformat, eines Software-Profilierungs-Berichts der Ausführung;
Erzeugen (S403a) eines Hostumgebungsbilds, das den Software-Profilierungs-Bericht in dem standardisierten Format codiert; und
Hinzufügen (S404a) des Hostumgebungsbilds zu dem Hostumgebungs-Bildrepository mit einer Kennung für den Code.

6. Computerimplementiertes Bildverarbeitungsverfahren gemäß einem der vorhergehenden Ansprüche, ferner umfassend Bevölkern des Zielumgebungs-Bildrepositorys durch, für jeden von mehreren Codes:
Durchführen (S401b) einer Ausführung des Codes in der Zielcomputerumgebung;
Verwenden (S402b) eines Software-Profilierungs-Werkzeugs zum Erzeugen, in dem Berichtsformat, eines Software-Profilierungs-Berichts der Ausführung;
Erzeugen (S403b) eines Zielumgebungsbildes, das den Software-Profilierungs-Bericht in dem standardisierten Format codiert; und
Hinzufügen (S404b) des Zielumgebungsbilds zu dem Zielumgebungs-Bildrepository mit einer Kennung für den Code.

7. Computerimplementiertes Verfahren, umfassend Durchführen des computerimplementierten Verfahrens nach einem der vorhergehenden Ansprüche mit jeder von mehreren unterschiedlichen Computerumgebungen als die Zielcomputerumgebung, und Auswählen einer Computerumgebung aus den mehreren unterschiedlichen Computerumgebungen, um den Code für zukünftige Ausführungen zu hosten, wobei die Auswahl auf den ausgegebenen Software-Profilierungs-Berichten basiert und in Übereinstimmung mit einer Computerumgebung-Auswahlrichtlinie geschieht.

8. Computerimplementiertes Verfahren, umfassend Durchführen des computerimplementierten Verfahrens nach einem der Ansprüche 1 bis 6 mit jedem von mehreren unterschiedlichen Codes als den Objektcode, und
Auswählen, aus den mehreren unterschiedlichen Codes, eines Codes zur Übertragung auf die Zielcomputerumgebung für zukünftige Ausführungen, wobei die Auswahl auf den ausgegebenen Software-Profilierungs-Berichten basiert und in Übereinstimmung mit einer Codeauswahlrichtlinie geschieht.

9. Computerimplementiertes Verfahren nach Anspruch 7 oder 8, wobei die Computerumgebungs-Auswahlrichtlinie oder die Codeauswahlrichtlinie dazu dient, die Ausführungszeit zu minimieren.

10. Prozessorhardware, die mit Speicherhardware verbunden ist, wobei die Speicherhardware Verarbeitungsanweisungen speichert, welche bei Ausführung durch die Prozessorhardware die Prozessorhardware veranlassen, ein Verfahren zur Vorhersage von Ausführungsleistungskennzahlen für einen Objektcode in einer Zielcomputerumgebung zu implementieren, wobei das Verfahren umfasst:
Erhalten von Zielumgebungsmitgliedsbildern, die jeweils einen Software-Profilierungs-Bericht einer Ausführung in der Zielcomputerumgebung eines Mitglieds eines Satzes von Codes in einem standardisierten Format codieren, wobei der Software-Profilierungs-Bericht durch ein Software-Profilierungs-Werkzeug und in einem Berichtsformat, das einen Wert von jeder von mehreren gekennzeichneten Ausführungsleistungskennzahlen umfasst, ausgegeben wird, wobei die Mitglieder des Satzes von Codes ausgewählt werden durch:
Erhalten (S305) eines Software-Profilierungs-Berichts einer Ausführung des Objektcodes in einer Host-Computerumgebung, die gegenwärtig den Objektcode hostet, wobei der Software-Profilierungs-Bericht von einem Software-Profilierungs-Werkzeug und in Übereinstimmung mit dem Berichtsformat ausgegeben wird;
Erzeugen (S306) eines Hostumgebungsobjekts, das den erhaltenen Software-Profilierungs-Bericht in dem erhaltenen Format codiert,
Speichern, in einem Hostumgebungs-Bildrepository, von Bildern, die Software-Profilierungs-Berichte von Ausführungen in der Host-Computerumgebung von jeweiligen identifizierten Codes in dem standardisierten Format codieren;
Speichern, in einem Zielumgebungs-Bildrepository, von Bildern, die Software-Profilierungs-Berichte von Ausführungen in der Zielcomputerumgebung von jeweils identifizierten Codes in dem standardisierten Format codieren;
Abfragen (S307) des Hostumgebungs-Bildrepositorys und des Zielumgebung-Bildrepositorys, um Codes, bezüglich derer Bilder sowohl in dem Hostumgebungs-Bildrepository als auch in dem Zielumgebungs-Bildrepository gespeichert sind, als Kandidatencodes zu identifizieren, und
Bestimmen (S308) der n dem Hostumgebungs-Objektbild ähnlichsten Bilder aus Hostumgebungs-Kandidatenbildern, wobei Hostumgebungs-Kandidatenbilder Bilder sind, die in dem Hostumgebungs-Bildrepository in Bezug auf die Kandidatencodes gespeichert sind, und Auswählen, als Mitglieder des Satzes von Codes, der Kandidatencodes, bezüglich derer die n ähnlichsten Bilder gespeichert sind;
Kombinieren (S309) der erhaltenen Zielumgebungsmitgliedsbilder zu einem kombinierten Zielumgebungsmitgliedsbild, das dem standardisierten Format entspricht, wobei die Kombination auf einem gewichteten Beitrag von jedem der erhaltenen Zielumgebungsmitgliedsbilder basiert, wobei die Gewichtung proportional zu einer Ähnlichkeitskennzahlquantifizierungs-Ähnlichkeit zwischen dem Objektcode und dem jeweiligen Mitglied des Satzes von Codes ist;
Verarbeiten (S310) des kombinierten Zielumgebungsmitgliedsbilds durch Decodieren des kombinierten Zielumgebungsmitgliedsbilds, um einen vorhergesagten Software-Profilierungs-Berichts zu extrahieren, und Ausgeben (S311) des vorhergesagten Software-Profilierungs-Berichts.

11. Computerprogramm, das bei Ausführung durch einen Computerprozessor den Computerprozessor veranlasst, ein Verfahren zur Vorhersage von Ausführungsleistungskennzahlen für einen Objektcode in einer Zielcomputerumgebung zu implementieren, wobei das Verfahren umfasst:
Erhalten von Zielumgebungsmitgliedsbildern, die jeweils einen Software-Profilierungs-Bericht einer Ausführung in der Zielcomputerumgebung eines Mitglieds eines Satzes von Codes in einem standardisierten Format codieren, wobei der Software-Profilierungs-Bericht durch ein Software-Profilierungs-Werkzeug und in einem Berichtsformat, das einen Wert von jeder von mehreren gekennzeichneten Ausführungsleistungskennzahlen umfasst, ausgegeben wird, wobei die Mitglieder des Satzes von Codes ausgewählt werden durch:
Erhalten (S305) eines Software-Profilierungs-Berichts einer Ausführung des Objektcodes in einer Host-Computerumgebung, die gegenwärtig den Objektcode hostet, wobei der Software-Profilierungs-Bericht von einem Software-Profilierungs-Werkzeug und in Übereinstimmung mit dem Berichtsformat ausgegeben wird;
Erzeugen (S306) eines Hostumgebungsobjekts, das den erhaltenen Software-Profilierungs-Bericht in dem erhaltenen Format codiert,
Speichern, in einem Hostumgebungs-Bildrepository, von Bildern, die Software-Profilierungs-Berichte von Ausführungen in der Host-Computerumgebung von jeweiligen identifizierten Codes in dem standardisierten Format codieren;
Speichern, in einem Zielumgebungs-Bildrepository, von Bildern, die Software-Profilierungs-Berichte von Ausführungen in der Zielcomputerumgebung von jeweils identifizierten Codes in dem standardisierten Format codieren;
Abfragen (S307) des Hostumgebungs-Bildrepositorys und des Zielumgebung-Bildrepositorys, um Codes, bezüglich derer Bilder sowohl in dem Hostumgebungs-Bildrepository als auch in dem Zielumgebungs-Bildrepository gespeichert sind, als Kandidatencodes zu identifizieren, und
Bestimmen (S308) der n dem Hostumgebungs-Objektbild ähnlichsten Bilder aus Hostumgebungs-Kandidatenbildern, wobei Hostumgebungs-Kandidatenbilder Bilder sind, die in dem Hostumgebungs-Bildrepository in Bezug auf die Kandidatencodes gespeichert sind, und Auswählen, als Mitglieder des Satzes von Codes, der Kandidatencodes, bezüglich derer die n ähnlichsten Bilder gespeichert sind;
Kombinieren (S309) der erhaltenen Zielumgebungsmitgliedsbilder zu einem kombinierten Zielumgebungsmitgliedsbild, das dem standardisierten Format entspricht, wobei die Kombination auf einem gewichteten Beitrag von jedem der erhaltenen Zielumgebungsmitgliedsbilder basiert, wobei die Gewichtung proportional zu einer Ähnlichkeitskennzahlquantifizierungs-Ähnlichkeit zwischen dem Objektcode und dem jeweiligen Mitglied des Satzes von Codes ist;
Verarbeiten (S311) des kombinierten Zielumgebungsmitgliedsbilds durch Decodieren des kombinierten Zielumgebungsmitgliedsbilds, um einen vorhergesagten Software-Profilierungs-Berichts zu extrahieren, und Ausgeben des vorhergesagten Software-Profilierungs-Berichts.

12. Computerlesbares Medium, das Verarbeitungsanweisungen zum Implementieren des Computerprogramms nach Anspruch 11 speichert.

13. Computerlesbares Medium nach Anspruch 12, wobei das computerlesbare Medium nichtflüchtig ist.

## Revendications

1. Procédé de traitement d'image mis en œuvre par ordinateur pour prédire des mesures de performance d'exécution pour un code objet sur un environnement informatique cible, comprenant les étapes ci-dessous consistant à :
obtenir des images d'éléments d'environnement cible qui codent chacune, dans un format standardisé, un rapport de profilage logiciel d'une exécution, sur l'environnement informatique cible, d'un élément d'un ensemble de codes, le rapport de profilage logiciel étant fourni en sortie par un outil de profilage logiciel et dans un format de rapport comprenant une valeur de chacune d'une pluralité de mesures de performance d'exécution étiquetées, dans lequel les éléments de l'ensemble de codes sont sélectionnés en mettant en œuvre les étapes ci-dessous consistant à :
obtenir (S305) un rapport de profilage logiciel d'une exécution du code objet sur un environnement informatique hôte hébergeant actuellement le code objet, le rapport de profilage logiciel étant fourni en sortie par un outil de profilage logiciel et conformément au format de rapport ;
générer (S306) une image objet d'environnement hôte codant, dans le format standardisé, le rapport de profilage logiciel obtenu ;
stocker, dans un référentiel d'images d'environnement hôte, des images codant, dans le format standardisé, des rapports de profilage logiciel d'exécutions, sur l'environnement informatique hôte, de codes respectivement identifiés ;
stocker, dans un référentiel d'images d'environnement cible, des images codant, dans le format standardisé, des rapports de profilage logiciel d'exécutions, sur l'environnement informatique cible, de codes respectivement identifiés ;
interroger (S307) le référentiel d'images d'environnement hôte et le référentiel d'images d'environnement cible, en vue d'identifier, en tant que des codes candidats, des codes relativement auxquels des images sont stockées à la fois dans le référentiel d'images d'environnement hôte et dans le référentiel d'images d'environnement cible ; et
déterminer (S308) les « n » images les plus similaires à l'image objet d'environnement hôte parmi des images candidates d'environnement hôte, les images candidates d'environnement hôte étant les images stockées dans le référentiel d'images d'environnement hôte relativement aux codes candidats, et sélectionner, en tant que les éléments de l'ensemble de codes, les codes candidats relativement auxquels les « n » images les plus similaires sont stockées ;
combiner (S309) les images d'éléments d'environnement cible obtenues en une image d'élément d'environnement cible combinée conforme au format standardisé, l'étape de combinaison étant basée sur une contribution pondérée à partir de chacune des images d'éléments d'environnement cible obtenues, la pondération étant proportionnelle à une mesure de similarité quantifiant une similarité entre le code objet et l'élément respectif de l'ensemble de codes ;
traiter (S310) l'image d'élément d'environnement cible combinée, en décodant l'image d'élément d'environnement cible combinée, en vue d'extraire un rapport de profilage logiciel prédit, et fournir en sortie (S311) le rapport de profilage logiciel prédit.

2. Procédé de traitement d'image mis en œuvre par ordinateur selon la revendication 1, dans lequel l'étape de détermination des « n » images les plus similaires à l'image objet, parmi les images candidates d'environnement hôte, comprend les étapes ci-dessous consistant à :
utiliser un réseau de neurones profond en qualité d'extracteur de caractéristiques en vue d'extraire des caractéristiques de l'image objet et des images candidates d'environnement hôte ;
comparer (S507a) les caractéristiques extraites de l'image objet aux caractéristiques extraites de chacune des images candidates d'environnement hôte individuellement, en vue d'obtenir un score de similarité quantifiant une similarité entre les caractéristiques extraites de la première image et chacune des images candidates d'environnement hôte ;
rechercher (S507b) les « n » scores de similarité les plus élevés, et déterminer les images respectives comme étant les « n » images les plus similaires à la première image.

3. Procédé de traitement d'image mis en œuvre par ordinateur selon l'une quelconque des revendications précédentes, dans lequel l'étape de décodage inclut l'étape consistant à introduire (S510) la nouvelle image unique dans un réseau de neurones artificiel auto-codeur formé pour extraire des rapports de profilage logiciel à partir d'images conformes au format standardisé.

4. Procédé de traitement d'image mis en œuvre par ordinateur selon l'une quelconque des revendications précédentes, dans lequel la pluralité de mesures de profilage étiquetées inclut des informations sur une utilisation de mémoire, une complexité temporelle, une utilisation d'instructions particulières, une fréquence et/ou une durée d'appels de fonction, et des informations sur la fréquence et/ou la durée d'appels de communication dans un environnement parallèle, la forme de l'étiquette étant dans chaque cas déterminée par l'outil de profilage logiciel.

5. Procédé de traitement d'image mis en œuvre par ordinateur selon l'une quelconque des revendications précédentes, comprenant en outre l'étape consistant à remplir le référentiel d'images d'environnement hôte, en mettant en œuvre, pour chaque code d'une pluralité de codes, les étapes ci-dessous consistant à :
mettre en œuvre (S401a) une exécution du code sur l'environnement informatique hôte ;
utiliser (S402a) un outil de profilage logiciel en vue de générer un rapport de profilage logiciel de l'exécution, dans le format de rapport ;
générer (S403a) une image d'environnement hôte, en codant, dans le format standardisé, le rapport de profilage logiciel ; et
ajouter (S404a) l'image d'environnement hôte au référentiel d'images d'environnement hôte avec un identificateur pour le code.

6. Procédé de traitement d'image mis en œuvre par ordinateur selon l'une quelconque des revendications précédentes, comprenant en outre l'étape consistant à remplir le référentiel d'images d'environnement cible en mettant en œuvre, pour chaque code d'une pluralité de codes, les étapes ci-dessous consistant à :
mettre en œuvre (S401b) une exécution du code sur l'environnement informatique cible ;
utiliser (S402b) un outil de profilage logiciel en vue de générer un rapport de profilage logiciel de l'exécution, dans le format de rapport ;
générer (S403b) une image d'environnement cible, en codant, dans le format standardisé, le rapport de profilage logiciel ; et
ajouter (S404b) l'image d'environnement cible au référentiel d'images d'environnement cible avec un identificateur pour le code.

7. Procédé mis en œuvre par ordinateur, comprenant l'étape consistant à mettre en œuvre le procédé mis en œuvre par ordinateur selon l'une quelconque des revendications précédentes, avec chaque environnement d'une pluralité d'environnements informatiques différents, en tant que l'environnement informatique cible ; et
l'étape consistant à sélectionner un environnement informatique, parmi la pluralité d'environnements informatiques différents, pour héberger le code à des fins d'exécutions futures, l'étape de sélection étant basée sur les rapports de profilage logiciel prédits fournis en sortie et selon une politique de sélection d'environnements informatiques.

8. Procédé mis en œuvre par ordinateur, comprenant l'étape consistant à mettre en œuvre le procédé mis en œuvre par ordinateur selon l'une quelconque des revendications 1 à 6, avec chaque code d'une pluralité de codes différents, en tant que le code objet ; et
l'étape consistant à sélectionner un code, parmi la pluralité de codes différents, à transférer vers l'environnement informatique cible, à des fins d'exécutions futures, l'étape de sélection étant basée sur les rapports de profilage logiciel prédits fournis en sortie et selon une politique de sélection de codes.

9. Procédé mis en œuvre par ordinateur selon la revendication 7 ou 8, dans lequel :
la politique de sélection d'environnements informatiques ou la politique de sélection de codes vise à minimiser un temps d'exécution.

10. Matériel de processeur couplé à un matériel de mémoire, le matériel de mémoire stockant des instructions de traitement qui, lorsqu'elles sont exécutées par le matériel de processeur, amènent le matériel de processeur à mettre en œuvre un procédé pour prédire des mesures de performance d'exécution pour un code objet sur un environnement informatique cible, le procédé comprenant les étapes ci-dessous consistant à :
obtenir des images d'éléments d'environnement cible qui codent chacune, dans un format standardisé, un rapport de profilage logiciel d'une exécution, sur l'environnement informatique cible, d'un élément d'un ensemble de codes, le rapport de profilage logiciel étant fourni en sortie par un outil de profilage logiciel et dans un format de rapport comprenant une valeur de chacune d'une pluralité de mesures de performance d'exécution étiquetées, dans lequel les éléments de l'ensemble de codes sont sélectionnés en mettant en œuvre les étapes ci-dessous consistant à :
obtenir (S305) un rapport de profilage logiciel d'une exécution du code objet sur un environnement informatique hôte hébergeant actuellement le code objet, le rapport de profilage logiciel étant fourni en sortie par un outil de profilage logiciel et conformément au format de rapport ;
générer (S306) une image objet d'environnement hôte codant, dans le format standardisé, le rapport de profilage logiciel obtenu ;
stocker, dans un référentiel d'images d'environnement hôte, des images codant, dans le format standardisé, des rapports de profilage logiciel d'exécutions, sur l'environnement informatique hôte, de codes respectivement identifiés ;
stocker, dans un référentiel d'images d'environnement cible, des images codant, dans le format standardisé, des rapports de profilage logiciel d'exécutions, sur l'environnement informatique cible, de codes respectivement identifiés ;
interroger (S307) le référentiel d'images d'environnement hôte et le référentiel d'images d'environnement cible, en vue d'identifier, en tant que des codes candidats, des codes relativement auxquels des images sont stockées à la fois dans le référentiel d'images d'environnement hôte et dans le référentiel d'images d'environnement cible ; et
déterminer (S308) les « n » images les plus similaires à l'image objet d'environnement hôte parmi des images candidates d'environnement hôte, les images candidates d'environnement hôte étant les images stockées dans le référentiel d'images d'environnement hôte relativement aux codes candidats, et sélectionner, en tant que les éléments de l'ensemble de codes, les codes candidats relativement auxquels les « n » images les plus similaires sont stockées ;
combiner (S309) les images d'éléments d'environnement cible obtenues en une image d'élément d'environnement cible combinée conforme au format standardisé, l'étape de combinaison étant basée sur une contribution pondérée à partir de chacune des images d'éléments d'environnement cible obtenues, la pondération étant proportionnelle à une mesure de similarité quantifiant une similarité entre le code objet et l'élément respectif de l'ensemble de codes ;
traiter (S310) l'image d'élément d'environnement cible combinée, en décodant l'image d'élément d'environnement cible combinée, en vue d'extraire un rapport de profilage logiciel prédit, et fournir en sortie (S311) le rapport de profilage logiciel prédit.

11. Programme informatique qui, lorsqu'il est exécuté par un processeur informatique, amène le processeur informatique à mettre en œuvre un procédé pour prédire des mesures de performance d'exécution pour un code objet sur un environnement informatique cible, le procédé comprenant les étapes ci-dessous consistant à :
obtenir des images d'éléments d'environnement cible qui codent chacune, dans un format standardisé, un rapport de profilage logiciel d'une exécution, sur l'environnement informatique cible, d'un élément d'un ensemble de codes, le rapport de profilage logiciel étant fourni en sortie par un outil de profilage logiciel et dans un format de rapport comprenant une valeur de chacune d'une pluralité de mesures de performance d'exécution étiquetées, dans lequel les éléments de l'ensemble de codes sont sélectionnés en mettant en œuvre les étapes ci-dessous consistant à :
obtenir (S305) un rapport de profilage logiciel d'une exécution du code objet sur un environnement informatique hôte hébergeant actuellement le code objet, le rapport de profilage logiciel étant fourni en sortie par un outil de profilage logiciel et conformément au format de rapport ;
générer (S306) une image objet d'environnement hôte codant, dans le format standardisé, le rapport de profilage logiciel obtenu ;
stocker, dans un référentiel d'images d'environnement hôte, des images codant, dans le format standardisé, des rapports de profilage logiciel d'exécutions, sur l'environnement informatique hôte, de codes respectivement identifiés ;
stocker, dans un référentiel d'images d'environnement cible, des images codant, dans le format standardisé, des rapports de profilage logiciel d'exécutions, sur l'environnement informatique cible, de codes respectivement identifiés ;
interroger (S307) le référentiel d'images d'environnement hôte et le référentiel d'images d'environnement cible, en vue d'identifier, en tant que des codes candidats, des codes relativement auxquels des images sont stockées à la fois dans le référentiel d'images d'environnement hôte et dans le référentiel d'images d'environnement cible ; et
déterminer (S308) les « n » images les plus similaires à l'image objet d'environnement hôte parmi des images candidates d'environnement hôte, les images candidates d'environnement hôte étant les images stockées dans le référentiel d'images d'environnement hôte relativement aux codes candidats, et sélectionner, en tant que les éléments de l'ensemble de codes, les codes candidats relativement auxquels les « n » images les plus similaires sont stockées ;
combiner (S309) les images d'éléments d'environnement cible obtenues en une image d'élément d'environnement cible combinée conforme au format standardisé, l'étape de combinaison étant basée sur une contribution pondérée à partir de chacune des images d'éléments d'environnement cible obtenues, la pondération étant proportionnelle à une mesure de similarité quantifiant une similarité entre le code objet et l'élément respectif de l'ensemble de codes ;
traiter (S311) l'image d'élément d'environnement cible combinée, en décodant l'image d'élément d'environnement cible combinée, en vue d'extraire un rapport de profilage logiciel prédit, et fournir en sortie le rapport de profilage logiciel prédit.

12. Support lisible par ordinateur stockant des instructions de traitement pour mettre en œuvre le programme informatique selon la revendication 11.

13. Support lisible par ordinateur selon la revendication 12, dans lequel le support lisible par ordinateur est non transitoire.
